# EUROPEAN PATENT APPLICATION

(11) **EP 3 176 035 A1**
(43) Date of publication of application: **07.06.2017**
(21) Application number: 15382603.7
(22) Date of filing: 03.12.2015
(51) Int. Cl.: B60R 1/00

(54) **A REAR VISION SYSTEM FOR A MOTOR VEHICLE**

(71) Applicant: Fico Mirrors S.A., 08028 Barcelona (ES)
(72) Inventor: GOMEZ TIMONEDA, David, 08232 VILADECAVALLS (Barcelona) (ES); LORIVAL, Frédéric, 08232 VILADECAVALLS (Barcelona) (ES); LÓPEZ GALERA, Robert, 08232 VILADECAVALLS (Barcelona) (ES)
(74) Representative: Carpintero Lopez, Francisco

(57) **Abstract**

The invention refers to a rear vision system (1) for a motor vehicle comprising a camera (2) for capturing an image (3) within a field of view, and a system controller (6) adapted for: displaying a first area (5) of the captured image (3), receiving and processing vehicle driving and/or user information, and selecting a second area (8' - 8"') of the captured image (3) depending on the received information, where each of the first and second areas (5, 8' - 8"') are smaller than the area of the captured image (3). The vehicle driving information may refer to a change in driving direction from a forward driving direction to a reverse driving direction or vice versa, an increase or decrease in driving speed with respect to a predefined driving speed value, and a change in lane.

## Description

### Object of the invention

The present invention relates to a rear vision system for a motor vehicle, specifically designed for displaying different views of the rear area of the vehicle according to user and/or vehicle driving information.

An object of the invention is to provide a rear vision system capable of improving driving safety.

Another object of the present invention is to provide a rear vision system capable of adapting the displayed image in function of current user and/or driving information, by means of a simple and cost-effective system.

Another object of the present invention is to provide a rear vision system that improves driver comfort.

### Background of the invention

Rear vision systems conventionally provide a rear view of the vehicle. Most of these systems are only used to assist drivers when parking the vehicle or exiting from a parking space. Such rear vision systems are activated when the reverse gear is engaged. Once the system is activated, an image of an area behind the vehicle is displayed.

Other rear vision systems display a rear view of the vehicle regardless of the gear and the vehicle direction. Systems of this kind assist drivers in both forward and reverse driving. These systems generally display the information captured by the rear camera.

In order to further improve the assistance to the drivers, some systems have been adapted for monitoring the user and driving conditions, and modifying the displayed image according to said conditions.

The application US2014240860 A1 describes an example of this kind of systems. The application describes a motor vehicle with an external rear-view mirror, a mirror drive coupled to the external rear-view mirror for moving the external rear-view mirror into a first mirror position or a second mirror position, and a control unit operatively configured to control the mirror drive such that the external rear-view mirror is moved between the positions in function of the driving speed determined by a vehicle speed sensor. The invention requires mechanical adaptations for modifying the displayed image, since the mirror is physically moved between a first and a second position. In this way, the application provides a costly and complex solution.

Other solutions modify the displayed image according to driving conditions, and further considering the driving environment.

The application US2011202240 A1 is an example of these systems. Said application describes a dynamic range display system for a vehicle capable of displaying the image captured by a camera together with a dynamic vehicle path line, which overlaps the image captured by the camera. The invention modifies the displayed image in function of the driving speed. However, the invention requires the driving environment monitoring by using distance sensors. Such sensors increase the cost, and complicate the data processing.

Therefore, it would be desirable in the vehicle industry to develop a rear view system capable of modifying the displayed image according to current user and/or vehicle driving information, in a simple and cost-effective way.

### Description of the invention

The present invention overcomes the above mentioned drawbacks by providing a system adapted for displaying different areas of a captured image considering user and/or vehicle driving information.

The invention refers to a rear vision system for a motor vehicle that comprises a camera for capturing an image within a field of view, and a system controller adapted for displaying a first area of the captured image, receiving and processing vehicle driving and/or user information, selecting a second area of the captured image depending on the received information, and displaying said second area. The first and second areas are smaller than the area of the captured image. The vehicle driving information comprises at least one of the following information: a change in driving direction from a forward driving direction to a reverse driving direction or vice versa, an increase or decrease in driving speed with respect to a predefined driving speed value, and a change in lane.

Thus, the system shows different views of the area behind the vehicle by just providing a camera for capturing a rear view image, and a system controller adapted for displaying a first area of the captured image, and for selecting and displaying a second area of the captured image when at least one of the following vehicle driving information is received by the system controller: a change in driving direction, an increase or decrease in driving speed with respect to a predefined driving speed, and a lane change.

The selection of different areas of the captured image allows displaying different views of the rearward area of the vehicle in function of current information, received from either the vehicle or a user. Thus, the driver is informed with a more detailed view of the area of interest. Thus, both the driving safety and the driver comfort are improved.

Also, since the invention only requires a camera and a controller, a simple and cost-effective solution is achieved by the invention.

### Brief description of the drawings

For a better comprehension of the invention, the following drawings are provided for illustrative and non-limiting purposes, wherein:
Figure 1 shows a schematic view of the rear vision system installed in a vehicle.
Figure 2 shows different views of the captured image. Figure 2a shows the captured image. Figures 2b and 2c show the different images that are displayed when driving direction changes from a forward to a reverse driving direction.
Figure 3 shows different views of the captured image. Figure 3a shows the captured image. Figures 3b and 3c show the different images that are displayed when the driving direction changes from reverse to a forward driving direction.
Figure 4 shows different views of the captured image. Figure 4a shows the captured image. Figures 4b and 4c show the different images that are displayed when the driving speed surpasses a predefined driving speed value.
Figure 5 shows different views of the captured image. Figure 5a shows the captured image. Figures 5b and 5c show the different images that are displayed when the driving speed falls below a predefined driving speed value.
Figure 6 shows different views of the captured image. Figure 6a shows the captured image. Figures 6b and 6c show the different images that are displayed in the event of a left lane change.
Figure 7 shows different views of the captured image. Figure 7a shows the captured image. Figures 7b and 7c show the different images that are displayed in the event of a right lane change.
Figure 8 shows an exploded view of a rear-view mirror according to a preferential embodiment of the invention.

### Preferred embodiments of the invention

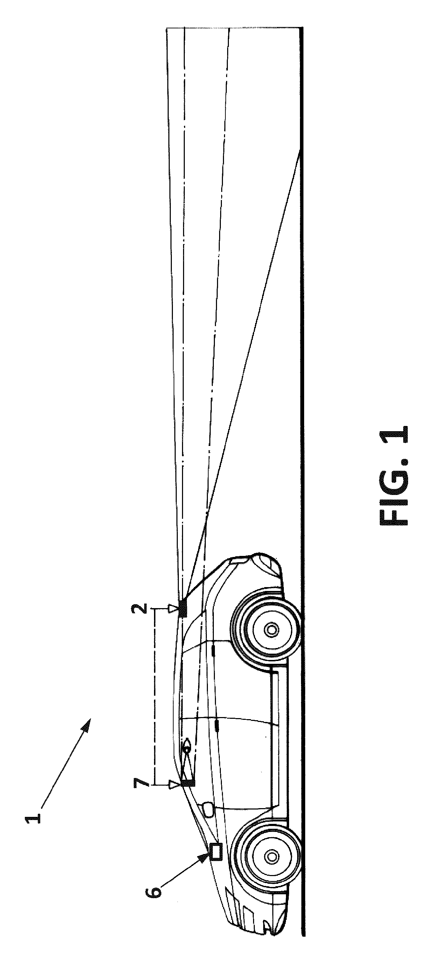

Figure 1 shows a schematic view of a rear vision system 1 installed in a vehicle. The system 1 comprises a camera 2 configured to capture an image 3, and a system controller 6 configured to display a first or a second area of the captured image 3 depending the vehicle driving and/or user information.

The camera 2 is placed at the rear part of the vehicle directed backwards to capture the area behind the vehicle. The camera 2 is in communication with the system controller 6 for receiving the image information associated to the image captured by the camera 2.

According to the invention, the system controller 6 is adapted for displaying a first area 5 of the captured image 3, and also for receiving and processing vehicle driving and/or user information for selecting a second area 8' - 8'" of the captured image 3 depending on the received information. The vehicle driving information at least corresponds to a change in driving direction from a forward driving direction to a reverse driving direction or vice versa, an increase or decrease in driving speed with respect to a predefined driving speed value, and a lane change.

According to a preferred embodiment, the system controller 6 is further adapted for selecting as second area 8' an area corresponding to a downward vertical displacement of the first area 5 such that the field of view is vertically displaced in a downward direction, when the driving direction is changed from a forward driving direction to a reverse driving direction, and selecting as second area 8' an area corresponding to an upward vertical displacement of the first area 5 such that the field of view is vertically displaced in an upward direction, when the driving direction is changed from a reverse driving direction to a forward driving direction.

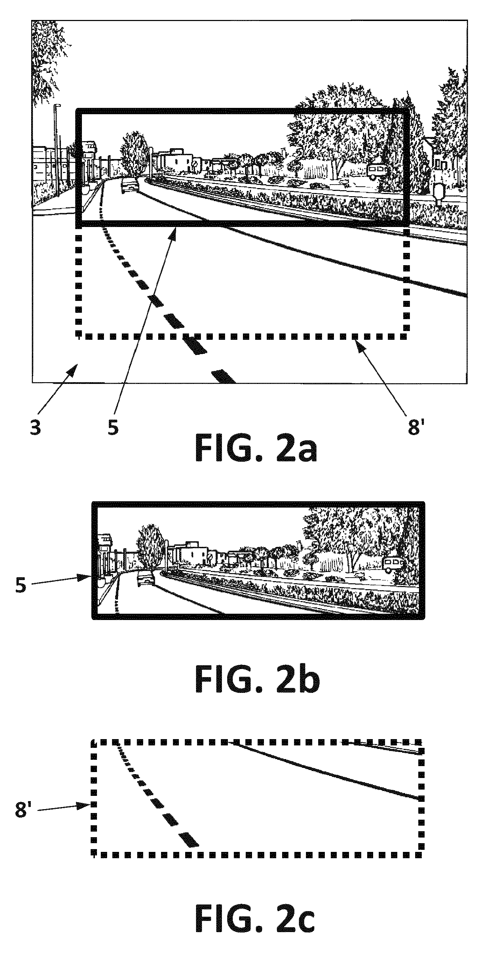

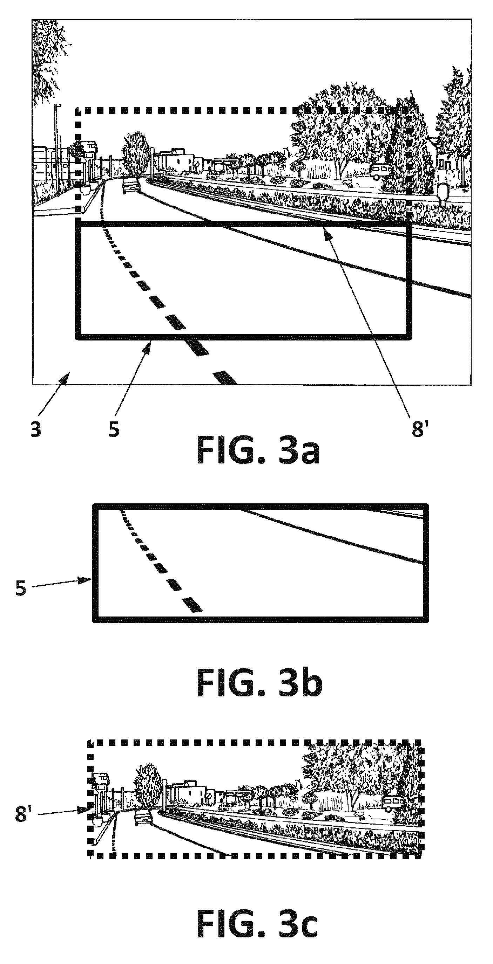

Figures 2 and 3 show the different areas that are displayed when the controller receives a change in the driving direction.

Figure 2a shows the entire captured image 3, and indicates the first 5 and second 8' areas, respectively displayed in Figures 2b and 2c. According to the embodiment, the system controller 6 is configured to change from displaying the first area 5 to display a second area 8' when the driving direction is changed from a forward driving direction to a reverse driving direction, wherein the second area 8' corresponds to a downward vertical displacement of the first area 5. Thus, a lower part of the captured image 3 is displayed when reverse driving is detected by the controller 6. Thus, the invention provides a view more centred in the ground, avoiding showing details of the upper part of the image, needless when parking, or when manoeuvring backwards.

Similarly, Figure 3a shows the entire captured image 3, and indicates the first 5 and second 8' areas, respectively displayed in Figures 3b and 3c. According to the embodiment, the system controller 6 is configured to change from displaying the first area 5 to display a second area 8' when the driving direction is changed from a reverse driving direction to a forward driving direction, wherein the second area 8' corresponds to an upward vertical displacement of the first area 5. Thus, an upper part of the captured image 3 is displayed when forward driving is detected by the controller 6. This way, driver has a better view of the area of interest, which in this case, corresponds with the farthest from the vehicle.

According to another preferred embodiment, the system controller 6 is adapted for selecting as second area 8" a part of the area of the first area 5 such that the zoom of the displayed image increases when the driving speed is increased such that it surpasses the predefined driving speed value, and selecting as second area 8" an area larger than the first area 5, where said second area 8" at least comprises the first area 5 such that the zoom of the displayed image increases when the driving speed is decreased such that it falls below the predefined driving speed value.

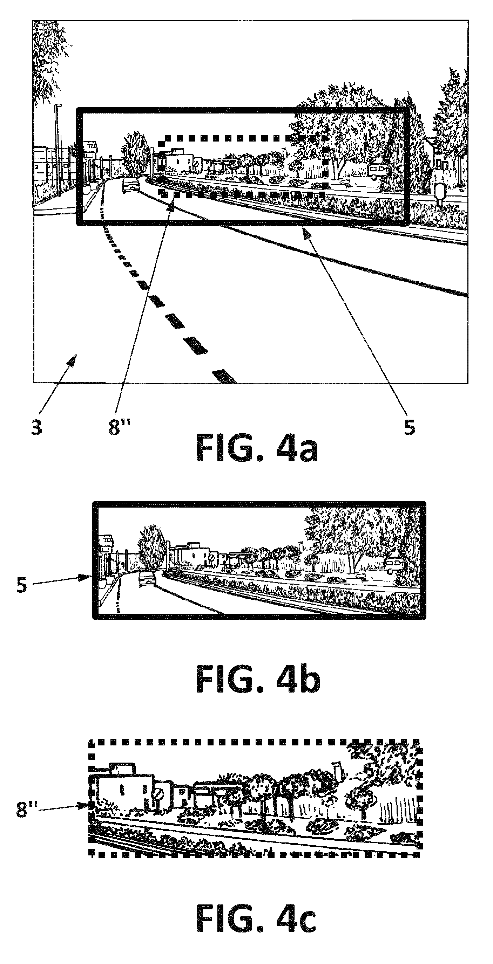

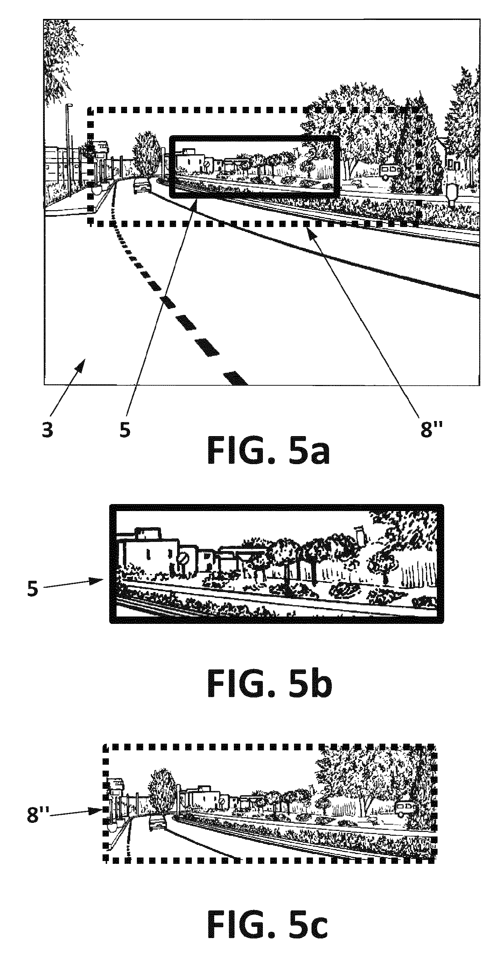

Figures 4 and 5 show the different areas that are displayed when the controller receives that a speed threshold is surpassed or fallen below.

Figure 4a shows the entire captured image 3, and indicates the first 5 and second 8" areas, respectively displayed in Figures 4b and 4c. According to the embodiment, the system controller 6 is configured to change from displaying the first area 5 to display a second area 8" when the driving speed is increased such that it surpasses a predefined speed threshold, wherein the second area 8" corresponds to a subarea of the first area 5. Thus, a smaller part of the captured image 3 is selected, and then an enlarged image is displayed when over speed is detected by the controller 6. In this way, the driver has a better view of the area of interest, which in this case, corresponds to a more detailed view of the farthest area from the vehicle.

Similarly, Figure 5a shows the entire captured image 3, and indicates the first 5 and second 8" areas, respectively displayed in Figures 5b and 5c. According to the embodiment, the system controller 6 is configured to change from displaying the first area 5 to display a second area 8" when the driving speed is decreased such that it falls below a predefined speed threshold, wherein the second area 8" comprises the first area 5. Thus, a larger part of the captured image 3 is selected, and then a reduced image is displayed when under speed is detected by the controller 6. In this way, the driver has a better view of the area of interest, which in this case, corresponds with a more general view of the rear area of the vehicle.

According to another preferred embodiment, the system controller 6 is adapted for selecting as second area 8'" an area corresponding to a rightward lateral displacement of the first area 5 such that the field of view is laterally displaced in a leftward direction in the event of a left lane change, and selecting as second area 8"' an area corresponding to a leftward lateral displacement of the first area 5 such that the field of view is laterally displaced in a rightward direction in the event of a right lane change.

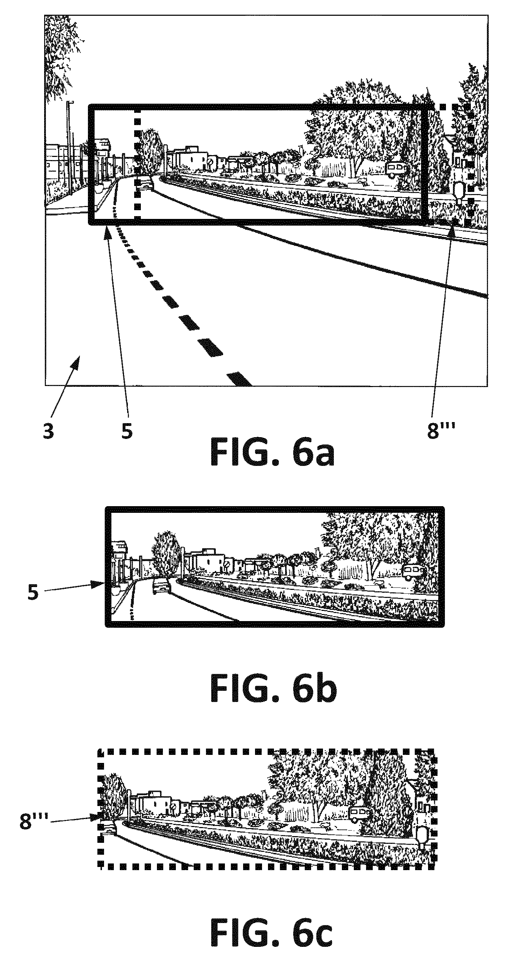

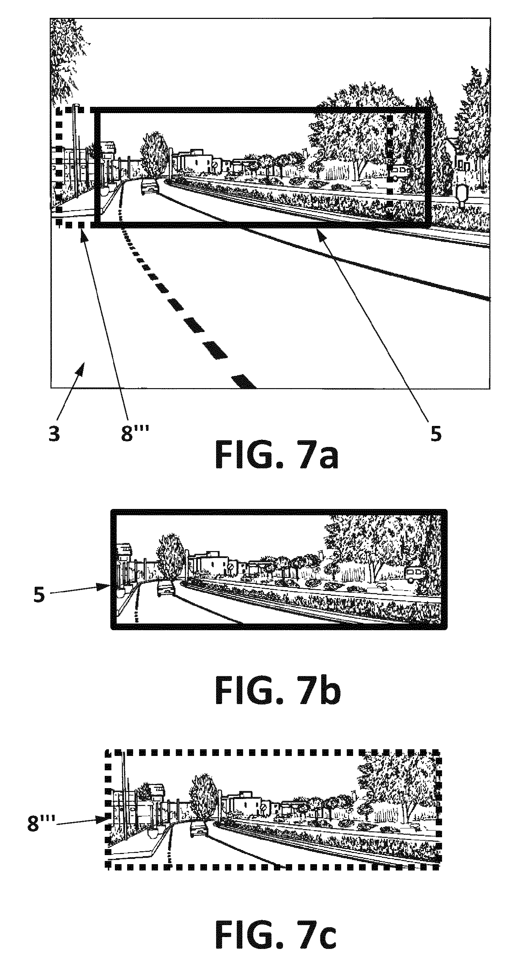

Figures 6 and 7 show the different areas that are displayed when the controller receives a change in lane.

Figure 6a shows the entire captured image 3, and indicates the first 5 and second 8'" areas, respectively displayed in Figures 6b and 6c. According to the embodiment, the system controller 6 is configured to change from displaying the first area 5 to display a second area 8'" when a left lane change is received, and wherein said second area 8'" corresponds to a rightward horizontal displacement of the first area 5. Thus, a right-shift part of the captured image 3 is displayed when a leftward direction is detected by the controller 6. In this way, the driver has a better view of the area that he is invading.

Similarly, Figure 7a shows the entire captured image 3, and indicates the first 5 and second 8'" areas, respectively displayed in Figures 7b and 7c. According to the embodiment, the system controller 6 is configured to change from displaying the first area 5 to display a second area 8'" when a change in lane is received, and wherein said second area 8'" corresponds to a leftward horizontal displacement of the first area 5. Thus, a left-shift part of the captured image 3 is displayed when a rightward direction is detected by the controller 6. In this way, the driver has a better view of the area that he is invading.

Preferably, the system controller 6 is adapted for receiving an activation signal of a blinker, and for triggering a lane change event upon receiving said activation signal.

In another preferred embodiment, the rear vision system 1 further comprises at least one surroundings sensor, at least one steering sensor, and a processor. The surroundings sensor is configured to acquire data on at least a portion of the surroundings of the vehicle to the side and/or to the rear. The steering sensor is configured to acquire steering angle data of the vehicle. The processor is adapted to process the data acquired by the at least one surroundings sensor to detect a moving object in the sensed portion of the surroundings of the vehicle, further adapted to process the steering angle data and to generate a lane change event if a moving object is detected and the steering angle is oriented towards the moving object.

As shown in Figures 2, 3, 6 and 7, the first 5 and second areas 8', 8'" have, preferably, the same dimensions.

Also, as shown in Figures 4, 5, 6 and 7, and according to another preferred embodiment, the second area 8", 8"' is vertically centred with respect to the first area 5.

Additionally, as shown in Figures 4, 5, 6 and 7, and according to another preferred embodiment, the second area 8", 8'" is horizontally centred with respect to the first area 5.

In another preferred embodiment, the rear vision system 1 further comprises a rear-view mirror 7, and a display 4 integrated into the rear-view mirror 3 for displaying the first 5 and second 8' - 8'" areas of the captured image 3.

The rear view system of the invention allows assisting drivers at least when the controller detects: a change in driving direction from a forward driving direction to a reverse driving direction or vice versa, an increase or decrease in driving speed with respect to a predefined driving speed value, and a change in lane. Therefore, the invention improves driving safety and driver comfort, since only the area of interest is shown to the driver.

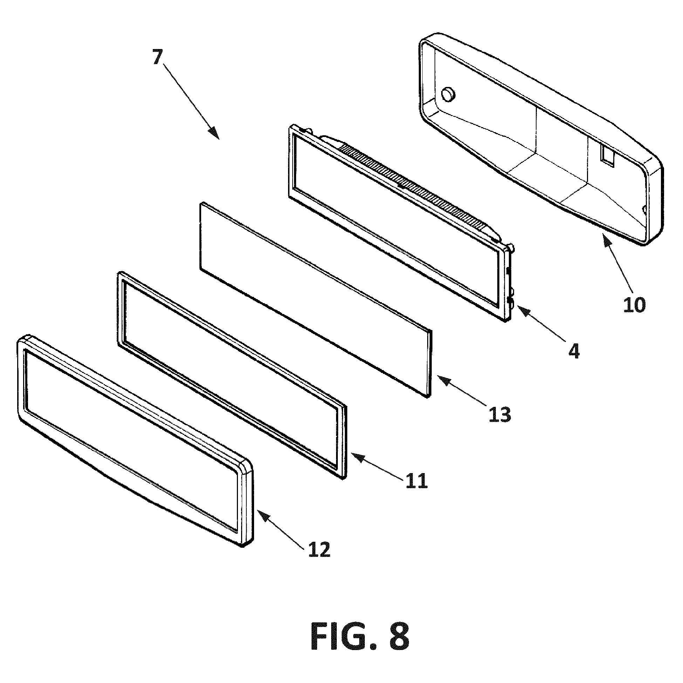

Figure 8 shows an exploded view of a preferred embodiment of the rear-view mirror 7. Preferentially, the rear-view mirror 7 is an interior rear-view mirror.

The rear-view mirror 7 comprises a display 4 integrated into the rear-view mirror 7 configured to display the first 5 and second 8' - 8'" areas of the captured image 3. Further, the rear-view mirror 7 may comprise a half mirror 13, integrated into the rear-view mirror 7 and mounted onto the display 4.

The rear-view mirror 7 preferentially comprises a housing having a rear cover 10 and a front frame 12, a rubber pad 11, the half mirror 13, and the display 4. The housing encloses and protects the elements that form the rear-view mirror 7, and the rubber pad 11 helps to secure the enclosed elements.

The half mirror 13 is adapted for showing the image displayed if it receives more light from the display 4 than from the outside, and for showing a reflected image if it receives more light from the outside than from the display 4. The half mirror 13, also known as one-way mirror, is an ordinary mirror that is coated on its back surface with a thin layer of metal, usually silver or aluminium, such that part of the light is reflected, and the other part penetrates the mirror 13.

Using this kind of mirror and mounting it directly over the display 4, the invention allows offering two working modes, one when the display is on, and the other one when the display is off.

Finally, according to another aspect of the present invention, the invention further comprises a vehicle comprising at least one of a dashboard, a header, a windshield or an A-pillar, a display 4 located on a surface of one of the dashboard, the header, the windshield or the A-pillar, and the rear vision system 1 as described, where the display 4 is adapted for displaying the first 5 and a second area 8' - 8"' of the captured image 3.

## Claims

1. A rear vision system (1) for a motor vehicle comprising:
- a camera (2) for capturing an image (3) within a field of view rear to the vehicle, and
- a system controller (6) adapted for:
(i) displaying a first area (5) of the captured image (3),
(ii) receiving and processing vehicle driving and/or user information,
(iii) selecting a second area (8' - 8"') of the captured image (3) depending on the received information, where each of the first and second areas (5, 8' - 8"') are smaller than the area of the captured image (3), and where the vehicle driving information comprises at least one of the following:
- a change in driving direction from a forward driving direction to a reverse driving direction or vice versa,
- an increase or decrease in driving speed with respect to a predefined driving speed value, and
- a change in lane,
(iv) and, displaying the second area (8' - 8"') of the captured image (3).

2. Rear vision system (1), according to claim 1, where the system controller (6) is adapted for:
(i) selecting as second area (8') an area corresponding to a downward vertical displacement of the first area (5) such that the field of view is vertically displaced in a downward direction, when the driving direction is changed from a forward driving direction to a reverse driving direction, and
(ii) selecting as second area (8') an area corresponding to an upward vertical displacement of the first area (5) such that the field of view is vertically displaced in an upward direction, when the driving direction is changed from a reverse driving direction to a forward driving direction.

3. Rear vision system (1), according to any of the preceding claims, where the system controller (6) is adapted for:
(i) selecting as second area (8") a part of the area of the first area (5) such that the zoom of the displayed image increases when the driving speed is increased such that it surpasses the predefined driving speed value, and
(ii) selecting as second area (8") an area larger than the first area (5), where said second area (8") at least comprises the first area (5) such that the zoom of the displayed image decreases when the driving speed is decreased such that it falls below the predefined driving speed value.

4. Rear vision system (1), according to any of the preceding claims, where the system controller (6) is adapted for:
(i) selecting as second area (8"') an area corresponding to a rightward lateral displacement of the first area (5) such that the field of view is laterally displaced in a leftward direction in the event of a left lane change, and
(ii) selecting as second area (8"') an area corresponding to a leftward lateral displacement of the first area (5) such that the field of view is laterally displaced in a rightward direction in the event of a right lane change.

5. Rear vision system (1), according to claim 4, where the system controller (6) is adapted for receiving an activation signal of a blinker and triggering a lane change event upon receiving said activation signal.

6. Rear vision system (1), according to any of claims 4 or 5, further comprising:
- at least one surroundings sensor configured to acquire data on at least a portion of the surroundings of the vehicle to the side and/or to the rear,
- at least one steering sensor configured to acquire steering angle data of the vehicle, and
- a processor adapted to process the data acquired by the at least one surroundings sensor to detect a moving object in the sensed portion of the surroundings of the vehicle, further adapted to process the steering angle data and to generate a lane change event if a moving object is detected and the steering angle is oriented towards the moving object.

7. Rear vision system (1), according to any of the claims 1-2 and 4-6, where the first (5) and second areas (8', 8"') have same dimensions.

8. Rear vision system (1), according to any of claims 1, 2 and 4 to 7, where the second area (8', 8") is vertically centred with respect to the first area (5).

9. Rear vision system (1), according to any of claims 1 and 3 to 7, where the second area (8", 8"') is horizontally centred with respect to the first area (5).

10. Rear vision system (1), according to any of the preceding claims, further comprising a rear-view mirror (7), and a display (4) integrated into the rear-view mirror (3) for displaying the first (5) and second (8' - 8"') areas of the captured image (3).

11. Vehicle comprising at least one of a dashboard, a header, a windshield or an A-pillar, a display (4) located on a surface of one of the dashboard, the header, the windshield or the A-pillar, and the rear vision system (1) according to any of claims 1 to 9, where the display (4) is adapted for displaying the image captured by the camera (2) of the rear vision system (1).
